# EUROPEAN PATENT APPLICATION

(11) **EP 1 096 747 A1**
(43) Date of publication of application: **02.05.2001**
(21) Application number: 00122668.7
(22) Date of filing: 18.10.2000
(51) Int. Cl.: H04L 25/14

(54) **Delay compensation for parallel transmission**

(30) Priority: 01.11.1999 GB 9925834
(71) Applicant: Virtual Access Ireland Limited, Dublin 2 (IE)
(72) Inventor: Stephenson, Nigel John, Charvil RG10 9TT, Berkshire (GB); Hood, Andrew Paul Thomas, Bingley BD16 4SG, West Yorkshire (GB)
(74) Representative: Collins, John David

(57) **Abstract**

A data communication system communicates a high bandwidth data stream of frames over a plurality of low bandwidth communication channels in which the communication channels can experience different transmission delays by segmenting the frames into each channel. The transmission delays are compensated for by applying various relative delays between the received data streams until a valid frame in the received data is obtained. This determined delay is then applied to compensate for the transmission delays in order to resynchronise received frame segments in the communication channels.

## Description

The present invention generally relates to a data communication system and method and more particularly to a data transmission system and method for transmitting data over a plurality of communication channels in which different transmission delays are possible.

There is a need in many areas to carry data between remote locations over a "wide area" communication links or circuits. Typically, the bandwidth (speed) available for carrying data within a location (e.g. a local area network) is many times larger than that available between locations over the wide area network, either because of the cost or because of the capabilities of the network. This is led to the desire to simultaneously transmit data through multiple lower bandwidth channels in order to provide an aggregated higher bandwidth channel between locations.

It is possible to provide such aggregated channels by using a fixed communication channel e.g. a leased line. However, the cost of such a dedicated line is high.

Therefore techniques have been developed for exploiting a plurality of channels in public telephone networks. The problem with using such networks is that there is no guarantee of the route through which data may pass in the separate channels. This inability to control the routing of the separate channels presents a problem in that the receiving equipment cannot guarantee receiving the data in each of the channels in the correct order.

In one prior art technique which has been developed to overcome this problem (disclosed on the World Wide Web at http://www.ascend.com/1130.html) an input data stream is encapsulated in a link layer protocol such as High Level Data Link Control (HDLC). The single HDLC data stream is then split across multiple channels and timing patterns are inserted into the data. The data is received and the timing patterns used in order to correctly recombine the original data stream from the correct bit sequence. The HDLC protocol is then stripped off the data stream and the data stream is output.

In this technique additional timing data is transmitted with the data. This has a disadvantage that the bandwidth available over the communication channels is reduced. Further, this arrangement requires specialist circuitry at both the transmission and the reception terminals.

Another implementation of the above mentioned technique has been developed for local area network (LAN) technologies and this is termed Multiple-Link Point to Point Protocol (MLPPP) This technique is discussed in "ISDN for Dummies" IDG Books, page 25 (ISBN 0-7645-0064-3). In MLPPP an additional protocol layer is inserted between a higher level protocol and the link layer such that the high level data is first divided into MLPPP frames before complete frames are passed over each of the channels. Thus in this technique the splitting of the data is handled by a higher level protocol which includes hand shaking and error correction capabilities. Once again, this technique suffers from the disadvantage that additional information has to be transmitted with the data i.e. control bits and flags are required to build the MLPPP frames. Further, the technique requires specialist hardware in both the transmitting and receiving terminals.

Another technique is disclosed in EP-A-0461445 in which data is transmitted at a high data rate over a plurality of lower speed channels by transmitting an alignment signal in order to determine the transmission delay times. The determined times are used to correct for the transmission delay times in subsequent data transmission.

This technique suffers from the disadavantage that specialist hardware is required in both the reception and transmission terminal. Also, an alignment signal is transmitted.

WO-A-9820627 discloses a technique in which synchronisation is maintained between a base transceiver station and an interworking function within a cellular communications network wherein standard synchronisation frames are tranmsmitted to initialise communication. The synchronisation frames are split into blocks and the blocks are numbered. The numbered blocks are then transmitted over multiple communication links and when they are received, the delay in each channel is varied by an amount necessary to reorder the blocks in the correct numbered sequence. This arrangement suffers from the disadvantage of requiring a transmission terminal capable of not just splitting the blocks but also adding in block numbering. The block numbering adds further data which has to be transmitted and complicates the system.

US-A-4775987 discloses a technique in which synchronisation signals are added to a transmission from a transmission terminal before data is transmitted. The synchronisation signals have a predetermined pattern designed to be segmented in a known manner between the multiple channels over which the synchronisation signal is transmitted for channel synchronisation purposes. When the synchronisation signal is received over the multiple channels they are delayed until the known pattern in the synchronisation signal is recreated. This technique suffers a disadvantage of requiring specialist hardware both at the reception and tranmission terminal since a special predetermined synchronisation signal is transmitted for channel synchronisation.

US-A-5408473 discloses a technique for use in a FDDI communication system in which the HALT code transmitted in accordance with the FDDI protocol to initalise a link issues for multiple channel synchronisation. The HALT code is of a known bit pattern which is transmitted repeatedly. Because of the repeated bit pattern, block boundaries between HALT codes can be detected in each channel by detecting a known bit pattern. This can be used for detecting the skew error between the transmission parts. This technique is limited to the FDDI protocol since it requires the transmission of a known bit pattern repeatedly.

There is an object of the present invention to provide a simple system for correcting for relative transmission delays between streams of data transmitted over a plurality of communication channels.

The present inventors have realised that it is possible to use a recognisable frame structure in a data stream using a known communication protocol in order to provide a simple system for aligning data transmitted in data channels which are subjected to different relative time delays. Thus the present invention provides a system in which frames split-up and spread across multiple data channels. When the data is received it is recombined and the frame structure in the data is validated. If the frame structure is not valid, the relative delays between the channels is determined by relatively shifting the data and recombining it on an iterative basis until the valid frames in the combined data stream are identified. The determined delay can then be used to compensate for the delays in the communication channels.

Thus the present invention provides a simple technique which is applicable to any communication protocol which uses frames or packets and does not require additional information to be transmitted with the data. This keeps the full bandwidth available for data.

In a preferred embodiment the correction of both transmission and reception of data over the communication channels can take place in a single terminal thus providing a system in which specialist delay determining and compensating circuitry is only required on one terminal.

Where the delays are symmetric the correction of both transmission and reception of data can take place using the determined transmission delays. If however, the delays are not symmetric, the transmission and reception delays have to be separately determined.

Advantageously the frame validity of received data can be continuously monitored and when an invalid frame is detected, the transmission delay can be redetermined and thus the compensation for the transmission delays can take place adaptively.

In accordance with the present invention, the frames (or packets) have a particular data structure which is identifiable. For example, a frame can comprise at least a flag identifying the start or end of a frame. In an embodiment, the data comprises a link level protocol which includes error correction codes. This provides a further distinctive structure in the data enabling the validation of the structure of frames. Such frame validation can simply be achieved using a conventional frame decoder which will output an error signal if a frame cannot be correctly decoded. The frames can comprise data frames or control frames.

The present invention encompasses arrangements wherein the transmission delay is detected at a first terminal and used to correct or receive data delays as well as for data transmitted from the terminal. Also, the invention encompasses an embodiment in which the determined transmission delay is transmitted to a second remote terminal from which the signal was transmitted for use in applying it to the signals received at the second terminal from the first terminal. Thus the present invention covers any arrangement in which data is transmitted between two terminals and, during full duplex communication, compensation of both transmission and reception occurs at either one of the terminals or both terminals correct for delays for received signals or correct for delays for transmitted signals.

Embodiments of the present invention will now be described with reference to the accompanying drawings, in which:
Figure 1 is a schematic diagram of a network in which relative delays occur between the transmission channels;
Figure 2 is a schematic diagram of a transmission system according to a first embodiment of the present invention;
Figure 3 is a schematic diagram of a data frame used in the first embodiment of the present invention;
Figure 4 is a more detailed diagram of the channel resynchronising demultiplexor of the first embodiment of the present invention;
Figure 5 is a flow diagram illustrating the method of operation of the first embodiment of the present invention;
Figure 6a and 6b are a flow diagram illustrating a method of detecting the transmission delay for the channels of the first embodiment of the present invention;
Figure 7 is a flow diagram illustrating the correction of the delay for signals received in the first embodiment of the present invention;
Figure 8 is a diagram illustrating a reply transmission arrangement used in the first embodiment of the present invention;
Figure 9 is a more detailed diagram of the channel delay shift multiplexor of the first embodiment of the present invention;
Figure 10 is a flow diagram illustrating the method of correcting for transmission delays in transmitted signals in the first embodiment of the present invention;
Figure 11 is a more detailed diagram of a channel resynchronising demultiplexor of a second embodiment of the present invention;
Figure 12 is a flow diagram illustrating the operation of the second embodiment of the present invention;
Figure 13 is a diagram illustrating a third embodiment of the present invention for transmitting data;
Figure 14 is a more detailed diagram of the channel delay shift multiplexor of the third embodiment of the present invention; and
Figure 15 is a flow diagram illustrating the method of compensating for transmission delay in a fourth embodiment of the present invention.

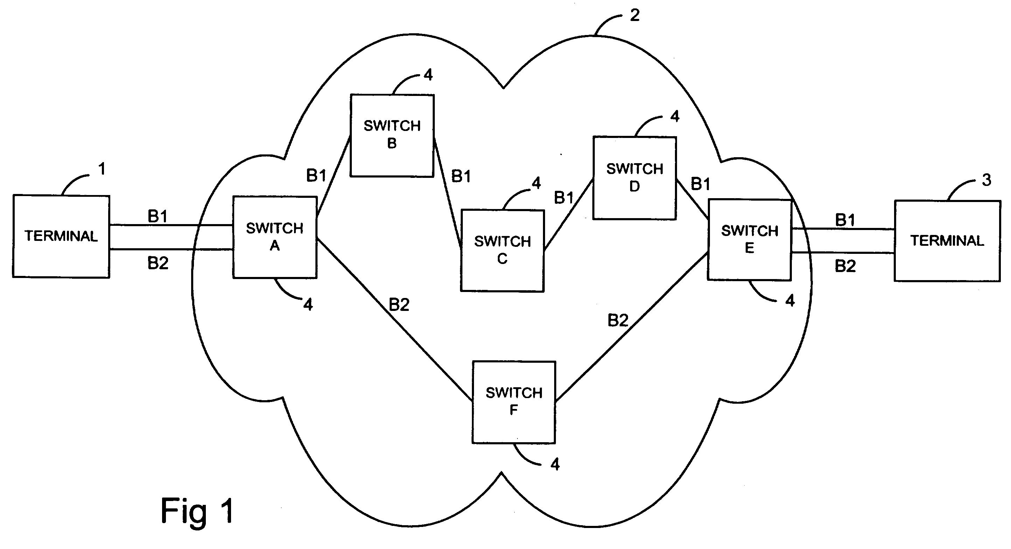

Referring now to the drawings, Figure 1 illustrates the problem to which the embodiments of the present invention described hereinafter are applied. A data stream is generated in a first terminal 1 for transmission using a basic rate ISDN (BRI) line over the ISDN network 2 to a second terminal 3.

The ISDN BRI line comprises two bearer channels (B1 and B2) for the transmission of data and one data channel (D) for the transmission of control and signalling information. The D channel has been omitted from the drawing in the interest of clarity since this is not used in the embodiments for transmitting data.

As can be seen in Figure 1, the two channels are routed between the terminals 1 and 3 by switches 4. The two communication channels B1 and B2 are initially received by switch A. Switch A then routes the B1 channel to switch B and B2 channel to switch F. B2 channel is then routed by switch F to switch E. The B1 channel is routed by switch B via switches C and D to switch E. Switch E then routes the two communication channels B1 and B2 to the terminal 3. It can thus be seen that the two channels B1 and B2 have taken different routes through the ISDN network 2. Because of the difference in the number of switches 4 arranged in the route taken by the communication channels B1 and B2, B1 will be relatively delayed with respect to B2. This delay must be compensated for and the mechanism for this is described hereinafter.

In Figure 1 reference has only been made to the transmission of data from the terminal 1 to terminal 3 over the ISDN network 2. However, in full duplex communication the communication channel B1 and B2 will be used for duplex communication and thus data will pass both ways. In this case, the delay will be experienced for both transmission and reception by both of the terminals 1 and 3.

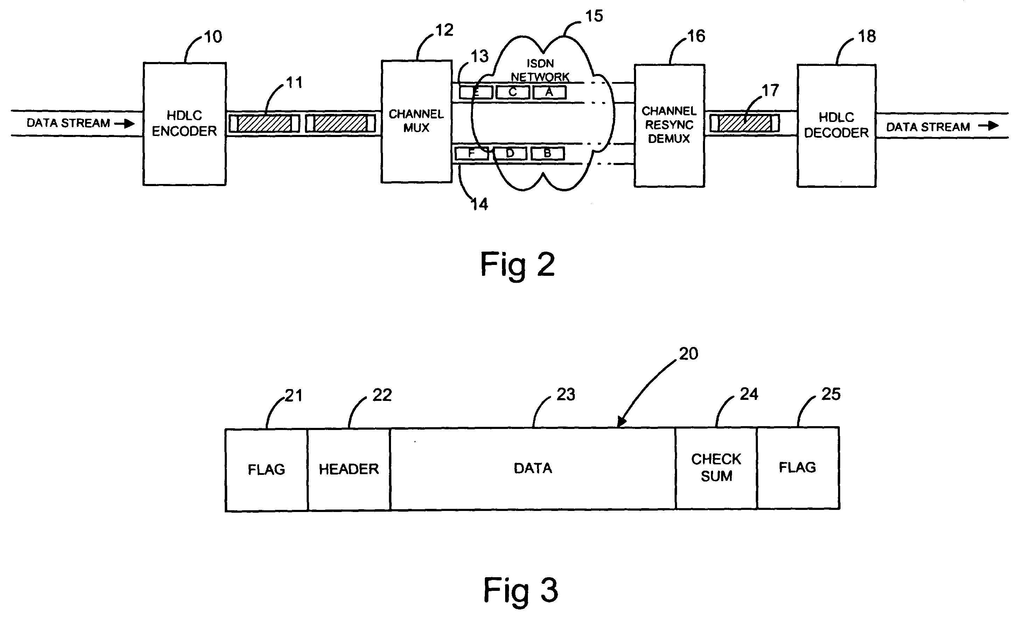

A first embodiment of the present invention will now be described with reference to Figures 2 to 10. Initially consideration will be given to data transmitted from terminal 1 to terminal 3. Subsequently consideration will be given to the response by terminal 3 by the transmission of data to terminal 1.

Referring now to Figure 2, this diagram illustrates schematically the system for transmission of data from terminal 1 to terminal 3. The data stream is generated in terminal 1 for transmission to terminal 3. The data is encapsulated in the link level protocol HDLC by the HDLC encoder 10. The HDLC encoder 10 outputs HDLC frames 11 to a channel multiplexor 12 for multiplexing the data stream across two channels 13 and 14. As can be seen in Figure 2, data which is input in the data stream ABCDEF on the first channel 13 as the data stream ACE and is output on the second channel 14 as the data stream BDF. These data channels are passed over the ISDN network 15 and are received by a channel resynchronising demultiplexor 16 which demultiplexes and resynchronises the channels so as to provide a recombined data stream which is of the correct structure i.e. HDLC frames 17. The generated HDLC frames are then input to a HDLC decoder 18 to remove the HDLC error checking codes and flags etc to generate an output data stream.

In this embodiment the data to be transmitted from terminal 1 to terminal 3 is encapsulated as HDLC frames. HDLC comprises a link layer protocol which includes error checking codes in the frames. Figure 3 illustrates schematically a HDLC frame structure.

The HDLC frame 20 comprises an initial flag 21 followed by header data 22. There is then a data portion 23 which is followed by a check sum portion and a final flag 25.

Thus the HDLC frame is an exemplary example of a structured sequence of data which comprises a frame structure which can be recognised.

In this embodiment of the present invention the data is transmitted in channels 13 and 14 using the ISDN network 15. In the ISDN BRI line the two bearer channels are 8-bit channels operating at 8 kilohertz thus providing two 64K bits/sec data channels. The HDLC data frames 11 are not treated any differently to binary data. The data frames merely present a frame structure in the data which can be used for properly recombining the data. The HDLC protocol also includes error checking and correcting codes to enable the correction of errors within a data frame.

Thus, if a 32 bit sequence of binary code is to be transmitted e.g. 01010101101010101111000000001111, it is transmitted over the two ISDN lines B1 and B2 as follows:

| **SAMPLE 1** | | **SAMPLE 2** | |
|---|---|---|---|
| B1 | B2 | B1 | B2 |
| 01010101 | 10101010 | 11110000 | 00001111 |

This example is based on the assumption that the first bit of the sequence falls on the first bit of a B1 payload.

If the network delays the B1 channel by one ISDN sample relative to the B2 channel then the receiver would see the following aggregated bit stream if it were combined without compensating for the delays:

| **SAMPLE 1** | | **SAMPLE 2** | |
|---|---|---|---|
| B2 | B1 | B2 | B1 |
| 10101010 | 01010101 | 00001111 | 11110000 |

In practice this bit stream of 32 bits would be preceded by two idle flags and address/control information which make take the form:

| **SAMPLE 1** | | **SAMPLE 2** | |
|---|---|---|---|
| B1 | B2 | B1 | B2 |
| 01111110 | 01111110 | 00000011 | 11000000 |
| FLAG | FLAG | ADDRESS 1 | ADDRESS 2 |

The bit stream would also normally be followed by a 16 bit frame check sum and two flags which might take the form:

| **SAMPLE 1** | | **SAMPLE 2** | |
|---|---|---|---|
| B1 | B2 | B1 | B2 |
| 11110000 | 00001111 | 01111110 | 01111110 |

Thus at the transmitter the complete bit stream would be transmitted as:

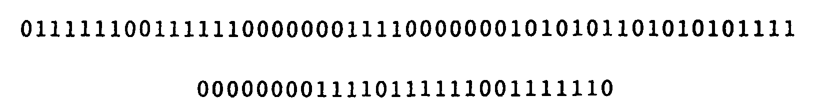

This can be expressed in hexadecimal octets as:
7E 7E 03 C0 55 AA F0 0F 7E 7E

At the receiver after the network delay imposed on the B1 channel this signal would be received as:

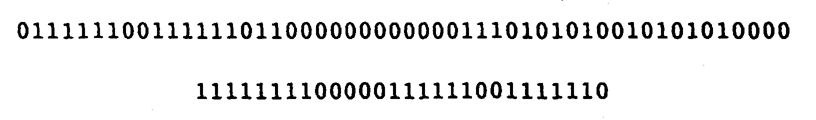

This can be expressed as hexadecimal octets as:
7E 7E C0 03 AA 55 0F F0 7E 7E

The technique by which this problem is corrected will now be described in more detail.

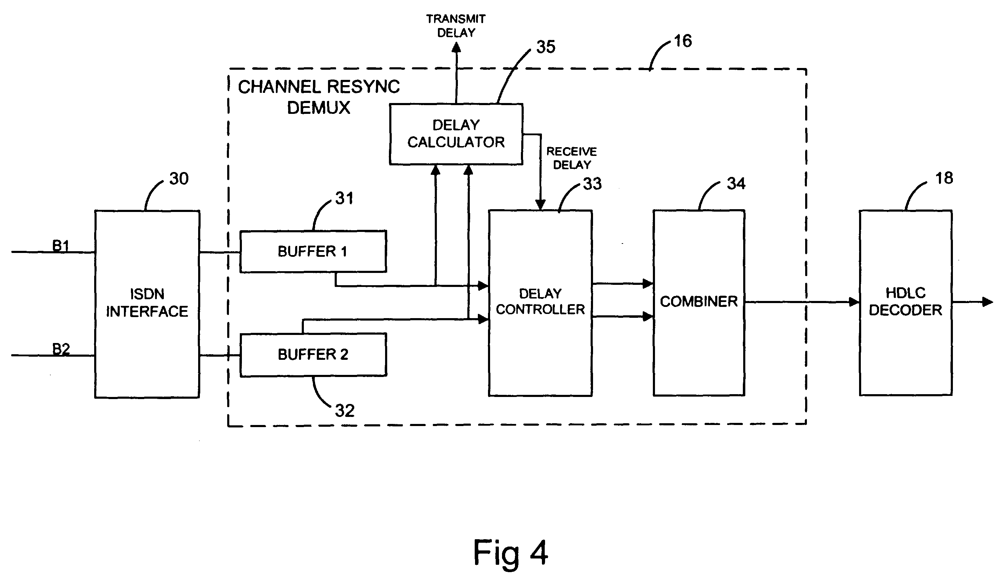

Figure 4 illustrates the channel resynchronising demultiplexor 16 in more detail. An ISDN interface is provided to receive the two communication channels B1 and B2 from the ISDN network 15. Within the channel resynchronising demultiplexor there is provided two buffers 31 and 32, one per channel. The data stream received on each channel B1 and B2 by the ISDN 30 is output into the respective buffers 31 and 32. These buffers 31 and 32 are of sufficient size to store sufficient number of data bits to contain a complete HDLC frame of maximum length, together with sufficient data bits to account for the maximum likely relative delay experienced between the B1 and B2 channels. Thus, the two buffers 31 and 32 hold the data transmitted as described hereinabove as follows:
- Buffer 1: XX 7E 03 55 F0 7E
- Buffer 2: 7E C0 AA 0F 7E YY
(where XX represents data belonging to a preceding HDLC frame and YY represents data belonging to a succeeding HDLC frame)

The content of buffers 31 and 32 can be read by a delay controller 33. The delay controller can read from buffers 31 and 32 at any point in the data sequence or buffer memory locations. Thus, the delay controller 33 can introduce relative delays between the data read out of the buffers 31 and 32 in order to compensate for the delays experienced whilst the data is transmitted over the data channels B1 and B2. The output of the delay controller 33 which comprises delay compensated data streams is input to a combiner 34 which combines the data streams to generate data which, if the delay is correctly calculated, will comprise HDLC frames. This data is then input into the HDLC decoder 18 to output the data stream.

In order to determine the correct compensating delays to be applied by the delay controller 33 to the data stream, a delay calculator 35 is provided. The delay calculator 35 can read the data from the buffers 31 and 32. The delay calculator 35 performs a relative delay shifting operation between the data streams in the channels and includes a HDLC decoding function to enable it to detect the correct frame structure in the combined data stream resulting from the relative delaying of the input data streams.

Once the relative delay has been calculated, a receive delay can be input into the delay controller 33 to be used for compensation of the relative delays in the received data streams. Also the delay calculator 35 determines a transmit delay which is output for use in the compensation of the delays incurred by the transmission of data back to terminal 1 from terminal 3.

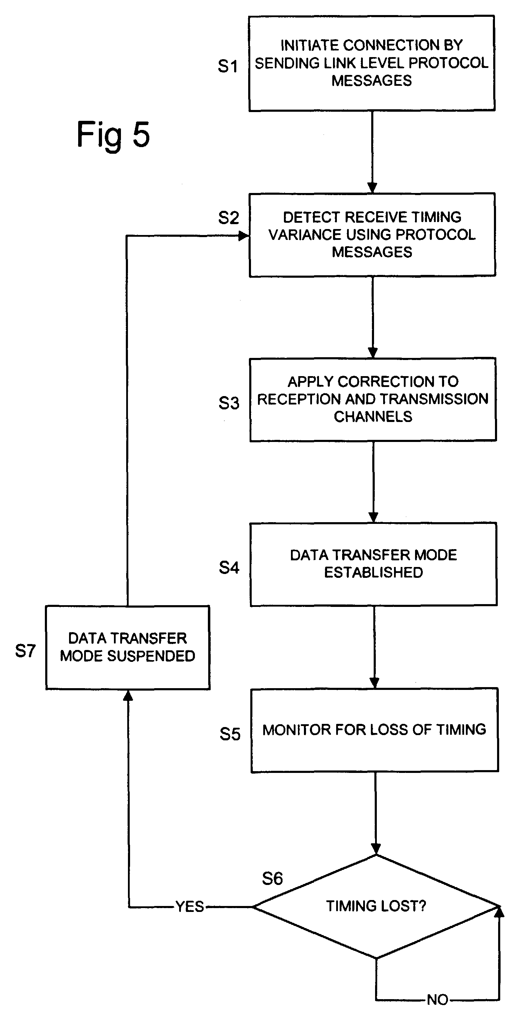

The operation of this embodiment to the present invention will now be described with reference to the flow diagram of Figure 5.

In step S1 the transmitting terminal 1 initiates a connection by sending link level protocol messages. The receive timing variance is detected using these protocol messages by the delay calculator 35 in step S2. The detected timing variance (delay) is then applied to correct the reception of signals in the delay controller 33 and used for correcting for delays in the transmission of data from terminal 3 in step S3. The data transfer mode is then established in step S4 and in step S5 the loss of timing is monitored by receiving errors from the HDLC decoder 18. If there is loss of timing determined in step S6 in step S7 the data transfer mode is suspended and the process returns to step S2 to detect the received timing variance using the link level protocol messages.

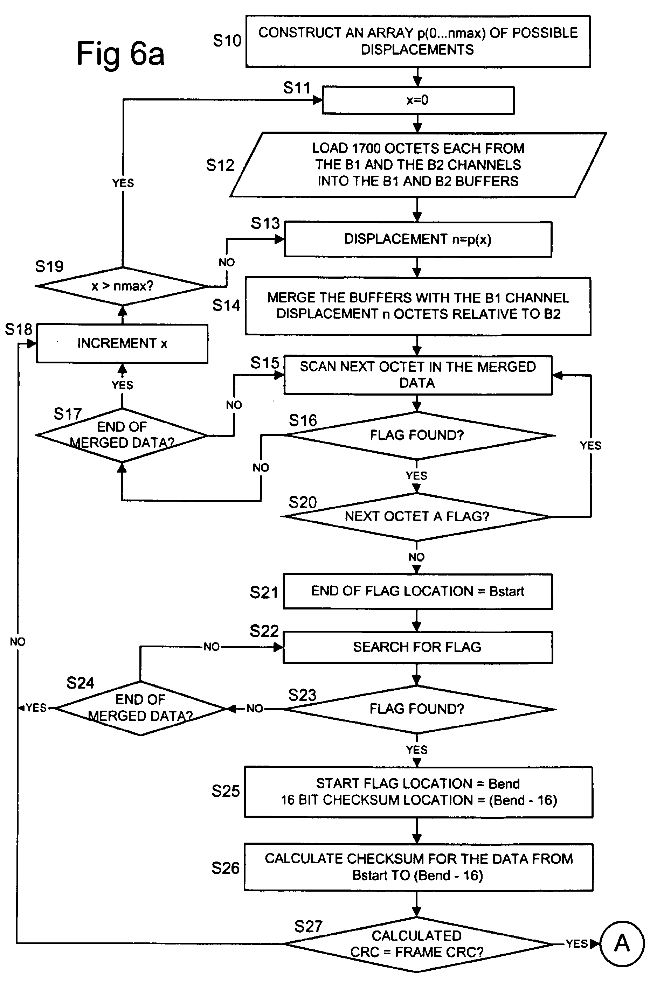

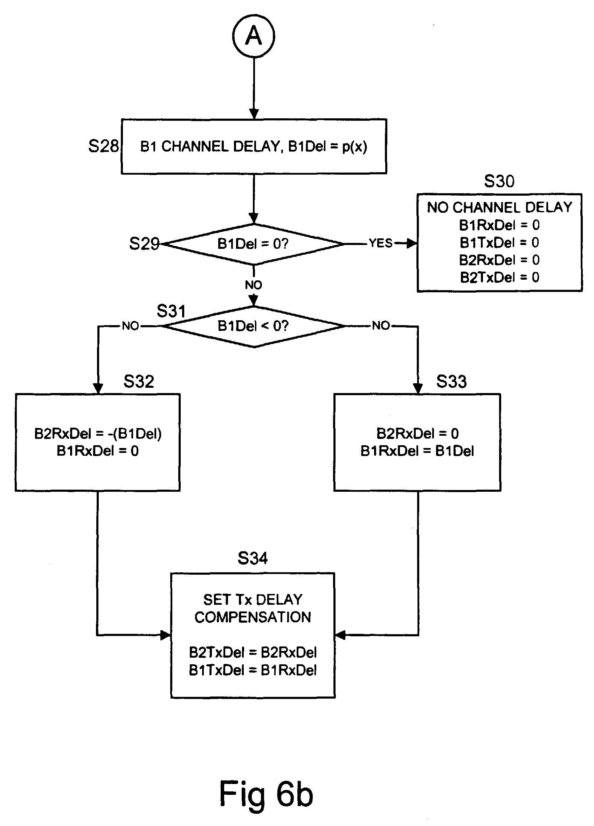

The method of detecting the received timing variance (delay) in step S2 of Figure 5 will now be described in more detail with reference to the flow diagram of Figures 6A and 6B.

In step S10 an array p(x) (where x=0...nmax) of possible displacement is constructed. In this embodiment, since the data is transmitted over the ISDN network 15, the delay will comprise an integer number of octets. Table 1 below illustrates such a constructed array to allow for a maximum possible relative displacement of 16 octets.

**TABLE 1**

| **x** | **p(x)** |
|---|---|
| 0 | 0 |
| 1 | -1 |
| 2 | +1 |
| 3 | -2 |
| 4 | +2 |
| ··· | ··· |
| 32 | +16 |

In step S11 x is set to 0 thus defining no relative displacement. In step S12 1700 octets each from the B1 and B2 channels are loaded into the B1 and B2 buffers 31 and 32. In step S13 the relative displacement n is set to the value of the array p(x). Thus on the first implementation there is no relative displacement. The content of the buffers is then merged with the B1 channel displaced relative to the B2 channel by a displacement of n octets.

Having merged the data streams, it now has to be determined whether the frame structure in the data is valid. In this embodiment this is achieved by detecting flags. Thus in step S15 the next octet in the merged data is scanned and in step S16 it is determined whether there is a flag found. If not in step S17 it is determined whether the end of the merged data has been reached and if not the process returns to step S15 to keep scanning for a flag. If the complete set of merged data has been scanned with no flag found, in step S18 x is incremented and in step S19 it is determined whether the end of the array has been reached, i.e. the maximum displacement has been reached. If not, the process returns to step S13 in order to try the next relative displacement in the array p(x). If the end of the array has been reached, the process returns to step S11 to reset the array counter x and to reload another set of data to retry.

If in step S16 a flag is found, in step S20 it is determined whether the next octet is a flag. If so, this indicates that a single flag at the start of a frame has not been found and thus the process returns to step S15 to scan the next octet to again to look for a single flag i.e. the start of a frame. If in step S20 it is determined that the next octet is not a flag in step S21 an end of flag location is set Bstart. In step S22 the next flag is then searched for and in step S23 if no flag is found, in step S24 it is determined whether the end of the merged data has been reached. If not, the process returns to step S22 to continue searching for a flag. If the end of the merged data has been reached, the process returns to step S18 to increment the array counter to try another displacement. If another flag is found in step S23, the start flag location is set as Bend in step S25 and the 16 bit check sum location in the frame is set as Bend-16. Having now located the check sum data as the data between Bend and Bend-16, in step S26 the check sum for the data from B start to (Bend-16) can be calculated. In step S27 it is then determined whether the calculated check sum is equal to the frame check sum contained in Bend-16 to Bend. If not, this indicates that the correct resynchronisation of the data has not been achieved and the process returns to step S18 to increment the array counter x in order to try another delay.

If in step S27 it is determined that the calculated check sum is equal to the frame check sum, the data streams have been correctly combined and thus the correct delay has been determined. Thus in step S28 the B1 channel delay (B1Del) is set equal to the content of the array p(x) since in step S14 the B1 channel data stream was delayed relative to the B2 channel data stream by n=p(x).

In step S29 it is then determined whether the B1 channel delay is equal to zero. If so, then there is no relative channel delay and the delays for the receive and transmit delays in both B1 and B2 channels can be set to zero. If the B1 channel delay is not zero, in step S31 it is then determined whether the B1 channel delay is less than zero i.e. negative. If the B1 channel delay is negative, in step S32 the B2 receive delay (B2RxDel) is set to minus the B1 channel delay and the B1 receive delay (B1RxDel) is set to zero. If in step S31 the B1 channel delay is greater than zero, in step S33 the B2 receive delay (B2RxDel) is set to zero and the B1 receive delay (B1RxDel) is set to the B1 channel delay. Thus in step S32 or in step S33 the receive channel delays are determined for the B1 and B2 channels.

Since full duplex communication takes place using the same channel, and the delay is assumed to be symmetric, in this embodiment, the same delay can be applied to the transmission of data in return. Thus in step S34 the determined delay for the receive data is used to set the delay for transmitted data. Thus the B2 transmit delay (B2TxDel) is set equal to the B2 receive delay (B2RxDel) and the B1 transmit delay (B1TxDel) is set equal to the B1 receive delay (B1RxDel).

In this way the delays for both the reception and transmission of data from terminal 2 is determined.

Thus as can be seen in this embodiment the frame structure in the recombined data can be validated by detecting the positions of flags and the data therebetween to thus identify the data portion in the HDLC frame and the error detecting and correcting check codes. In this embodiment the frame structure is validated by checking the position of the flags and by comparing the calculated check sum for the data in the frame with the frame check sum.

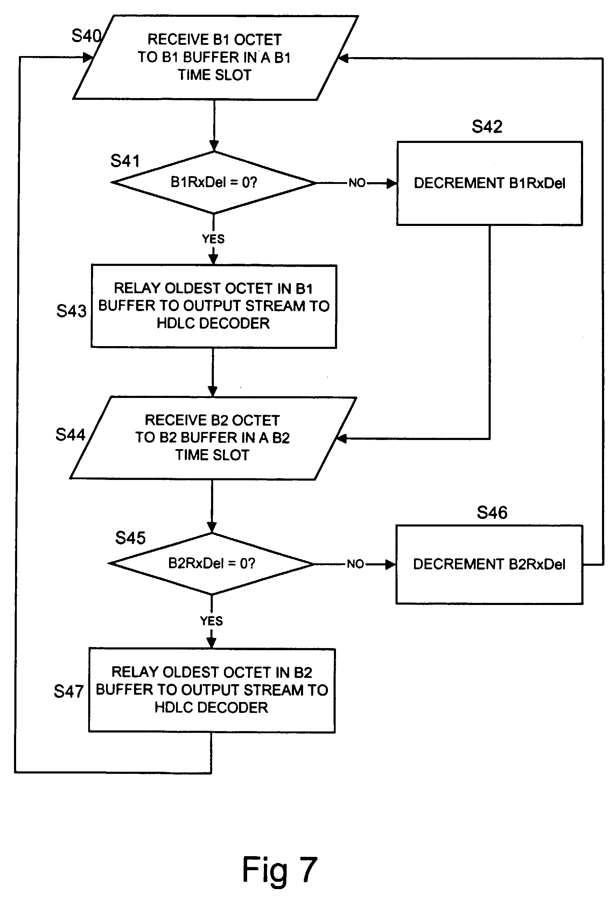

Having now determined the relative delay between the data streams in the channels, this is then applied to the received data streams and this will be described in more detail with reference to the flow diagram of Figure 7.

In step S40 a B1 octet is received into the B1 buffer 31 in a B1 time slot. In step S41 it is determined whether the B1 receive delay is zero. If the B1 receive delay is not zero, in step S42 the B1 receive delay is decremented and the process proceeds to step S44. If in step S43 it is determined that the B1 receive delay is zero, the oldest octet in the B1 buffer 31 is relayed out by the delay controller 33 by the combiner 34 to the HDLC decoder 18.

In step S44 a B2 octet is received into the B2 buffer 32 in a B2 time slot. Then in step S45 it is determined whether the B2 receive delay is zero. If it is not in step S46 the B2 receive delay is decremented and the process returns to step S40 to receive a B1 octet into the B1 buffer 31. If the B2 receive delay is zero in step S47 the oldest octet in the B2 buffer is relayed via the delay controller 34 and the combiner 35 to the HDLC decoder 18 and the process returns to step S40 to receive the next B1 octet in the B1 buffer 31.

Thus if the B1 receive delay is set to 1 and the B2 receive delay is set to zero, when the first B1 octet is received, it is not output but is instead stored in the buffer and the B1 receive delay is decremented to zero. The first B2 octet received is then output. The oldest octet in the B1 buffer is then output followed by the next B2 octet. In this way, the sequence of output octets is shifted. The shifting of the octets can take place either by initially outputting B1 octets until resynchronisation is achieved or initially outputting B2 octets until resynchronisation is achieved.

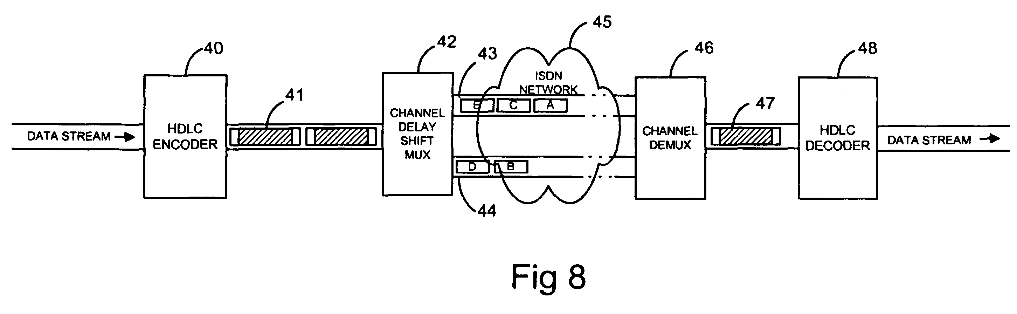

The transmission of data from terminal 2 to terminal 1 in this first embodiment will now be described with reference to Figures 8 to 10.

Figure 8 is a schematic diagram of a transmission channel from terminal 3 to the terminal 1 in which the receive and transmission delays have been calculated. This diagram is similar to the diagram of Figure 2 except that in this transmission arrangement in response to the reception of data, the data is transmitted with compensating delays between the data channels.

A data stream is received by the HDLC encoder 40 to generate HDLC frames 41 which are input to a channel delay shift multiplexor 42. The channel delay multiplexor 42 splits the data stream across two channels 43 and 44 and introduces a compensating relative delay between the data stream in the two channels 43 and 44 in accordance with the transmit delay calculated as described hereinabove. The two data channels 43 and 44 are transmitted over the ISDN network 45 and are received by a channel demultiplexor 46 which simply demultiplexes the channels in order to recombine the data to provide the HDLC frames 47 which are then passed to the HDLC decoder 48 to generate the data stream. Thus for the transmission of data back from terminal 3 to terminal 1, the calculated receive delay is used as the transmit delay to predelay the transmitted data stream so that it is received at terminal 1 in synchronism to enable the simple recombination of the data streams to generate the HDLC frames 47.

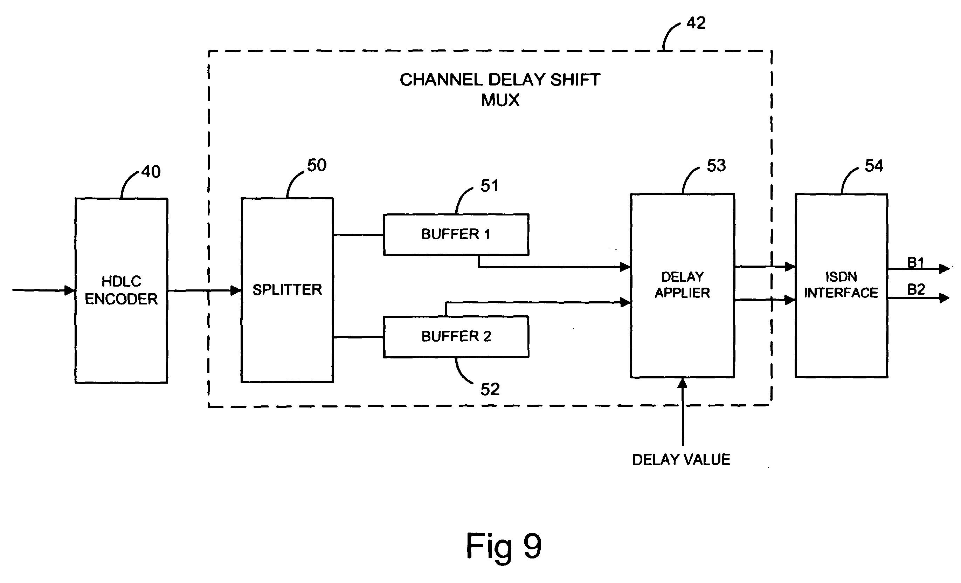

Figure 9 is a more detailed diagram of the components including the channel delay shift multiplexor 42. The data stream is input into the HDLC encoder 40 which inputs HDLC frames into a splitter 50 which splits the incoming data stream between two channels which are input into two buffers 51 and 52 respectively. A delay applier 53 receives a delay value calculated from the received data as described hereinabove. The delay applier 53 uses the delay to apply it to data read from the buffers 51 and 52. The delay data streams are then output to an ISDN interface 54 for the transmission of the data streams over the B1 and B2 channels over the ISDN network 45.

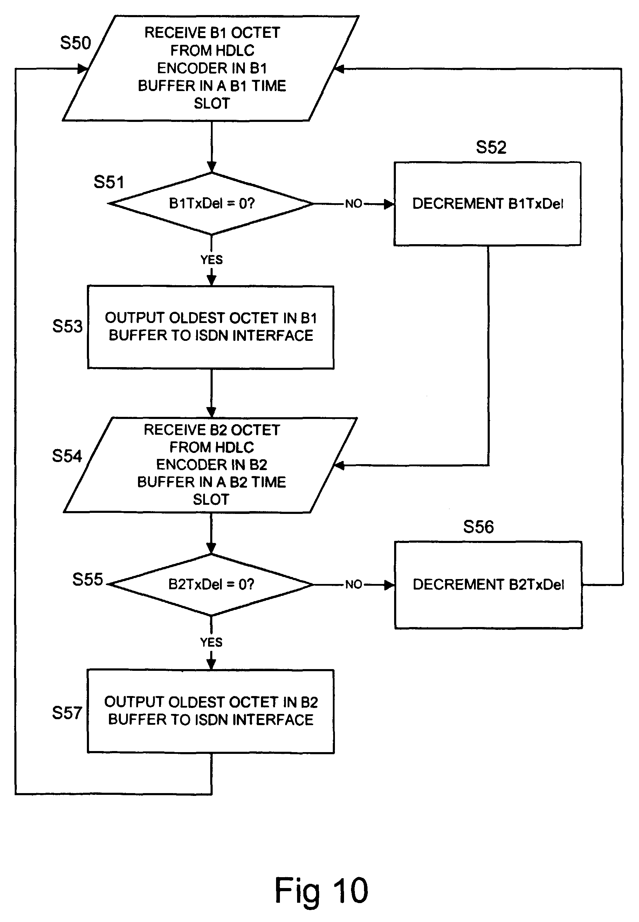

The method by which the delays are applied to the transmit channels will now be described with reference to the flow diagram of Figure 10.

The method of applying the transmission delays is similar to the method of applying a receive delay described with reference to Figure 7.

In step S50 a B1 octet is received from the HDLC encoder 40 in the B1 buffer 51 in a B1 time slot. In step S51 it is determined whether the B1 transmit delay is zero and if not in step S52 the B1 transmit delay is decremented and the process proceeds to step S54. If in step S51 it is determined that the B1 transmit delay is zero, in step S53 the oldest octet in the B1 buffer 51 is output to the ISDN B1 interface. Then in step S54 a B2 octet is received from the HDLC in the B2 buffer 52 in a B2 time slot. In step S55 it is determined whether the B2 transmit delay is zero and if not the B2 transmit delay is decremented in step S56 and the process returns to step S50. If the B2 transmit delay is zero, in step S57 the oldest octet in the B2 buffer 52 is output to the ISDN interface and the process returns to step S50.

Thus in this way the delay is determined from the reception data in terminal 3 is used for the compensation of the transmission of data from terminal 3 to terminal 1.

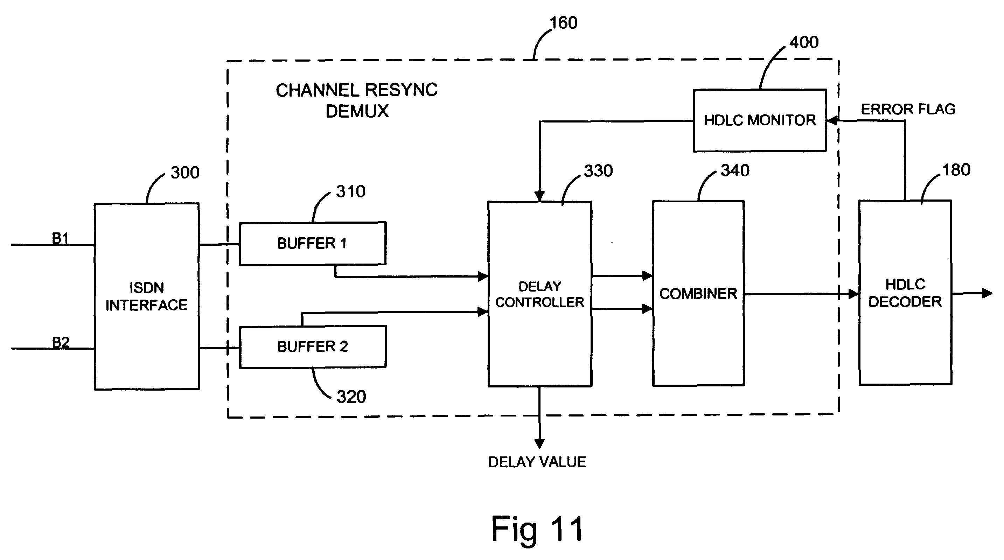

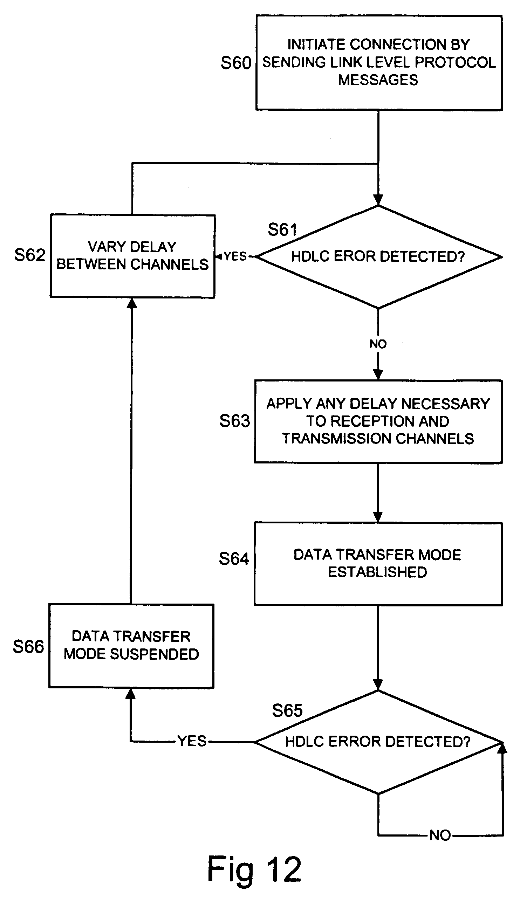

A second embodiment to the present invention will now be described with reference to Figures 11 and 12.

This embodiment of the present invention varies from the first embodiment in that instead of a delay calculator 35 separately determining a delay value, in the channel resynchronising demultiplexor, the delay value is determined iteratively by varying the delay in the delay controller 330 as illustrated in Figure 11.

In this embodiment an ISDN interface 300 receives the data on the B1 and B2 channels and this is in input into buffers 310 and 320. The delay controller 330 reads the data stream from the buffers 310 and 320 and outputs this to the combiner 340. The output of the combiner is then input into the HDLC controller 180. In this embodiment the normal facility of the HDLC controller is used in that when the HDLC decoder cannot properly decode HDLC frames, an error flag is generated. In this embodiment this is read by an HDLC monitor 400 within the channel resynchronising demultiplexor 160 and this is used to control the delay control 330.

The operation of the second embodiment of the present invention will now be described with reference to the flow diagram of Figure 12.

In step S60 a connection is initiated by sending link level protocol messages from terminal 1 to terminal 3. The HDLC decoder 180 attempts to decode the protocol messages following the recombination of the data streams by the combiner 340. In step S61 the HDLC monitor 400 detects whether or not there is an HDLC error flag generated by the HDLC decoder 180. If so, the HDLC monitor 400 controls the delay controller 330 in steps S62 to vary the delay between the channels. In step S63 terminal 1 then sends further link level protocol messages and the process then returns to step S61 to detect whether or not there is an HDLC error. As soon as no HDLC error is detected in step S64, the delay controller 330 is controlled to set the delay for the reception of data and the delay is output for use in the transmission of data from terminal 3 to terminal 1.

In step S65 the data transfer mode is then established and in step S66 data transfer continues until and HDLC error is detected. When a HDLC error is detected in step S67 the data transfer mode is suspended and the HDLC monitor 400 controls the delay controller 330 to vary the delay between the channels. The process then returns to step S61 once again to detect any HDLC errors. As soon as no errors are detected the delays can once again be reapplied in step S64 and in step S65 the data transfer mode can once again be established.

Thus in accordance with this embodiment, instead of there being an initial synchronising step in accordance with the first embodiment, the output of the HDLC decoder can be monitored in order to provide an adaptive system. Thus in this embodiment the HDLC decoder performs the pattern detection in the recombined data stream.

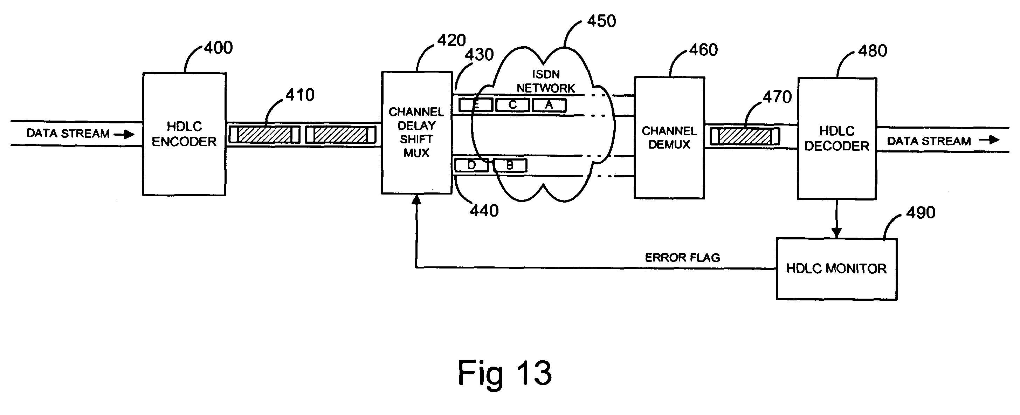

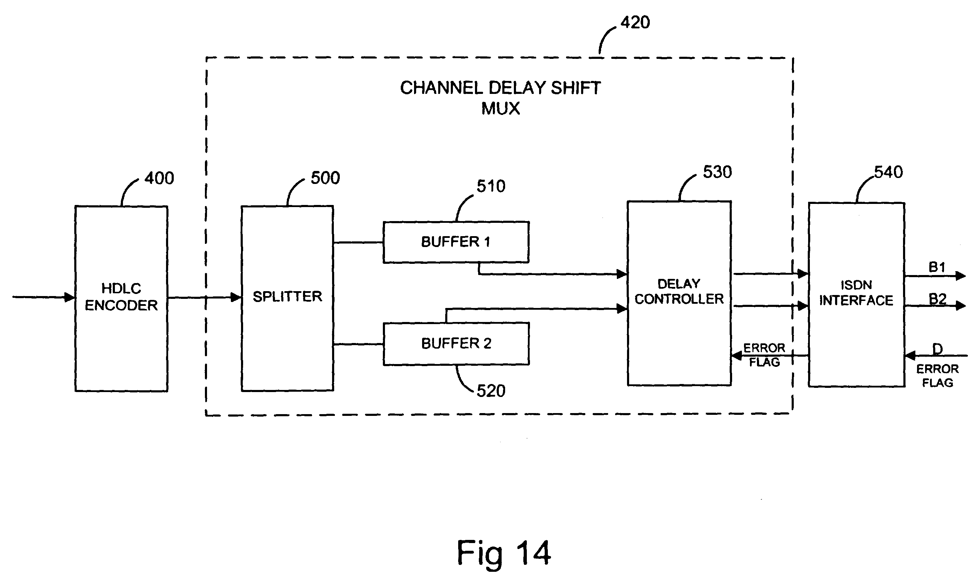

A third embodiment to the present invention will now be described with reference to Figures 13 and 14. In this embodiment the compensation for transmission delays takes place in the transmitting terminal, but in contrast to the previous embodiments, there is monitoring of the synchronism of the data received at the remote terminal in order to apply the correct compensation.

Thus can be seen in Figure 13, data to be transmitted from the terminal e.g. terminal 1 is encoded as HDLC frames 410 by the HDLC encoder 400. The HDLC frames 410 are input into a channel delay shift multiplexor 420 in order to split the data stream across two channels 430 and 440. The two channels 430 and 440 pass through the ISDN network 450 as B1 and B2 channels. The two channels are received at a remote terminal e.g. terminal 3 and are input into a channel demultiplexor 460 in order to recombine the data channels to general HDLC frames 470. The HDLC frames are then input into an HDLC decoder 480 to output the data stream within the remote terminal. An HDLC monitor 490 is provided in order to detect errors in the HDLC decoding carried out by the HDLC decoder 480. Thus if the data input into the HDLC decoder 480 is not recognisable as HDLC frames, an error flag is generated and transmitted back to the channel delay shift multiplexor 420 at the transmitting terminal. This can be then be used by the channel delay shift multiplexor 420 to apply the necessary correcting delay shift between data transmitted on the two channels 430 and 440 so that when data is received by the channel demultiplexor 460, it is received in synchronism.

Figure 14 illustrates the components of the transmitted terminal including the channel delay shift multiplexor 420 in more detail.

A data stream is received by the HDLC encoder 400 to generate HDLC frames. The HDLC frames comprise a data stream which are input to a splitter 500 which splits the data between two data channels and output the data to two buffers 510 and 520 respectively. The data within the buffers 510 and 520 can be read by a delay controller 530. The delay controller 530 reads the data from the buffers 510 and 520 and applies varying delays therebetween. Output from the delay controller 530 are two data streams which have been relatively delayed and these are input into an ISDN interface 540 for the transmission of the two data streams over the two ISDN channels B1 and B2.

In this embodiment an ISDN BRI line is used for the transmission of the two data channels and thus a control channel D is also provided. Any error flags generated by the HDLC monitor 490 as a result of errors detected by the HDLC decoder 480 can be transmitted over the D channel and received by the ISDN interface 540. These can then be passed back to the delay controller 530 in order to trigger a change in the relative delay of the data channels in order to iteratively attempt to apply the correct compensating delay.

This embodiment to the present invention is implemented in the same way as described with reference to the second embodiment to the present invention and thus the flow diagram of Figure 12 applies. This embodiment to the present invention differs in that the detection of the error in resynchronisation is carried out at the remote terminal.

In this embodiment detected errors caused by the lack of synchronisation of the channels used for transmission are signalled back to the transmitting terminal out of the communication band. In this embodiment this is achieved using the D channel which can be provided in an Always-On Dynamic ISDN service (AO/DI service). Alternatively, any separate permanent signalling channel could be used.

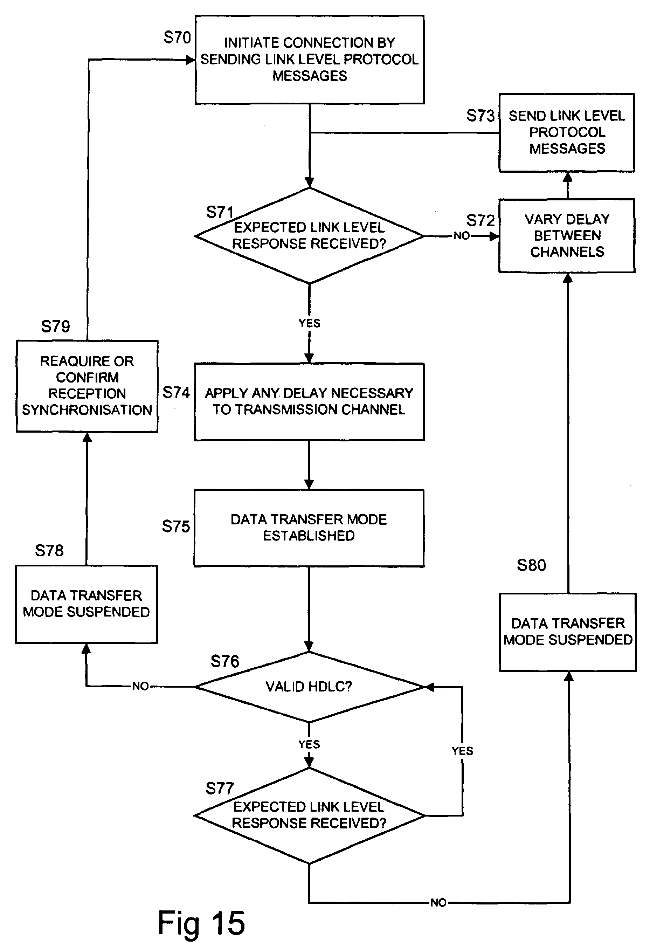

A fourth embodiment of the present invention will now be described with reference to the flow diagram of Figure 15.

In this embodiment compensation for both transmission and reception delays takes place in a single terminal i.e. terminal 1. Errors due to lack of synchronisation in the channels are returned in the communication band.

In this embodiment in order for terminal 1 to communicate with terminal 3, terminal 1 implements the technique of Figures 2 to 7 of the first embodiment or 11 and 12 of the second embodiment in order to determine the reception delays (and an initial value for the transmission delay).

This technique assumes that both terminals will attempt to initiate a logical connection once the physical ISDN connection is made. This is supported by the conventional HDLC protocol.

In the flow of Figure 5 diagram terminal 3 attempts to initiate the logical connection by transmitting link level protocol messages in step S1. Terminal 1 then performs the steps of S2 to S7 in order to determine the relative reception delay between the communication channels. Thus terminal 1 can now be sure of properly receiving messages from terminal 3.

Terminal 1 then has to determine the transmission delay to terminal 3. In a symmetric communication path the transmission and reception delays will be the same, as considered for the first embodiment of the invention. Thus even if it is unknown whether the path is symmetrical, the value for the reception delay is a good starting value to try for the transmission delay: if the path is symmetric no adjustment of the transmission delay value will be needed or, if the path is not symmetric, it is likely that there is little difference between the reception and transmission delays and thus the search for the correct transmission delay value is made easier.

The process implemented in terminal 1 for determining (or confirming) the transmission delay will now be described with reference to the flow diagram of Figure 15.

In step S70 terminal 1 attempts to initiate a logical connection with terminal 3 by transmitting link level protocol messages split over the two channels illustrated in Figures 8, 9 and 10. The initial transmission delay used in this embodiment corresponds to the determined reception delay (although in the invention any initial relative delay can be used). Since the reception channel has already been synchronised by the calculation and application of the reception delay, if the protocol messages are properly received by terminal 3, terminal 1 would expect to receive an appropriate acknowledgement in order to set up the logical link. Thus in step S71 terminal 1 determines whether the expected link level response has been received. If not, in step S72 the transmission delay is varied and in step S73 link level protocol messages are again transmitted. Terminal 1 then again monitors for the expected response. Thus terminal 1 will iteratively search for the correct transmission delays.

Once the correction transmission delay has been found, and in step S71 it is determined that the expected response has been received in step S74 the delay is applied to all future transmissions in the transmission channel. The terminal can then enter the data transfer mode in step S75.

In step S76 it is then determined whether valid HDLC frames are received. If not, this indicates that data which has been transmitted from terminal 3 has not been correctly received at terminal 1. Thus in step S78 the data transfer mode is suspended and in step S79 terminal 1 reacquires reception transmission synchronisation using the process as described hereinabove (step S79), and then transmission synchronisation is reacquired or confirmed by returning to step S70.

If in step S76 it is determined that valid HDLC frames are being received, which indicate that the received channel is synchronised, in step S77 it is determined whether the expected link level response is received. If so, this indicates that both the reception and transmission synchronisation is satisfactory and the process returns to step S76 to repeat the loop of determining whether valid HDLC frames are received in step S76 and whether the expected link level response is received in step S77.

If in step S77 it is determined that the expected link level response is not received, this indicates that transmission synchronisation has been lost and thus in step S80 the data transfer mode is suspended and the process returns to step S72 to vary the delay between the channels to try to resynchronise transmission.

Thus this embodiment of the present invention allows for synchronisation to be achieved even in an asymmetric communication path using a single terminal adapted for the process. The remote terminal (terminal 3) is not involved and thus does not require any specialist hardware or control. It simply receives data split over a plurality of channels, recombines it, and splits data for transmission over a plurality of channels.

This fourth embodiment of the present invention is similar to the third embodiment except that in band signalling is used from the remote terminal i.e. using the expected (embedded) pattern in the received data from the remote terminal. This is beneficial since it does not require an additional signalling channel.

Although the present invention has been described hereinabove with reference to four specific embodiments, it will be apparent to the skilled person in the art that other arrangements are encompassed within the scope of the claims.

Although the embodiments have been described with reference to the detection of the HDLC frame structure within the received data stream, the present invention is applicable to any frame or packet structure. So long as the protocol of the transmitted data stream is known, valid frames of the protocol can be identified in the received data stream in order to apply the correct delay compensation.

The embodiments have been described with reference to the use of an ISDN BRI line. However, the present invention is not limited to merely the use of two data channels. The present invention is equally applicable to the use of multiple ISDN lines. Further, the present invention is applicable to the use of any type of communication lines, e.g. analog lines over the public switch telephone network (PSTN). The advantages of the present invention can be obtained by the aggregation of any low bandwidth communication channels in order to provide high bandwidth communication between terminals over a network.

Although specific embodiments have been described in which compensation takes place in a particular terminal for either reception or/and transmission of data, the present invention is applicable to any combination e.g. the detection of the delay in one terminal and the compensation for transmission or the reception in either terminal. Further the detection process may simply take the form, as illustrated in the third embodiment, of the detection of an error in a remote terminal and the calculation of the necessary compensating delay in another terminal.

The present invention is not limited to the use of duplex communication lines. Also the number of transmission and reception channels used in duplex communication can be different.

The embodiments of the present invention can be implemented either partly or wholly in hardware or software. Thus the means for performing the function can comprise either hardware components or circuits or functional code modules implemented by a processor.

## Claims

1. A method of communicating over a plurality of communication channels, each communication channel introducing a different possible transmission delay, the method comprising:
receiving a stream of frames of a known communication protocol;
splitting each frame to form a stream of frame segments for each communication channel without the addition of any data for synchronising said communication channels;
transmitting the formed streams of frame segments in said communication channels;
receiving the transmitted streams of frame segments;
recombining the received streams of frame segments to form a recombined stream;
determining if the recombined frame fragments form valid frames in the recombined stream, and if not, repeatedly: relatively delaying the streams of frame fragments, recombining the relatively delayed streams of frame fragments, and determining if the recombined frame fragments form valid frames, until valid frames are determined; and
compensating for any relative delays between the communication channels to recreate valid frames in the recombined stream by relatively delaying the streams of frame fragments using the relative transmission delays determined in the determining step.

2. A method according to claim 1, wherein the determining step delays the streams of frame segments before transmission.

3. A method according to claim 1, wherein the determining step delays the streams of frame segments after transmission.

4. A method according to claim 1 or claim 2, wherein said compensating step takes place before transmission of the formed streams of frame segments by relatively delaying the formed streams of frame segments in accordance with the determined transmission delays.

5. A method according to claim 1 or claim 2, wherein said compensating step takes place after reception and before recombination of the received streams of frame segments by relatively delaying the received streams of frame segments in accordance with any stored delays.

6. A method according to any preceding claim in which the streams of frame segments are transmitted from a first terminal to a second terminal, the method including a second said receiving step, splitting step, transmitting step, receiving step and recombining step for the transmission an input stream of frame segments over a plurality of communication channels from said second terminal to said first terminal, and a second compensation step for compensating for the delays experienced by streams of frame segments transmitted from said second terminal to said first terminal over said communication channels.

7. A method according to claim 6, wherein said second compensation step compensates for the delays experience by said streams of frame segments transmitted from said second terminal to said first terminal over said communication channels using the relative transmission delays determined in the determining step.

8. A method according to claim 6, including a second determining step of determining the relative transmission delays experience by streams of frame segments transmitted from said second terminal to said first terminal by relatively delaying the streams of frame segments until valid frames are determined in the recombined stream, wherein said second compensation step compensates for the delays experienced by the streams of frame segments transmitted from said second terminal to said first terminal over said communication channels using the relative transmission delays determined in said second determining step.

9. A method according to claim 8, wherein said second determining step relatively delays the streams of frame segments before transmission.

10. A method according to claim 8, wherein said second determining step relatively delays the streams of frame segments after transmission.

11. A method according to any one of claims 6 to 9, wherein said second compensating step takes place before transmission of the formed streams of frame segments by relatively delaying the formed streams of frame segments in accordance with the determined transmission delays.

12. A method according to any one of claims 6 or 8 or 10, wherein said second compensation step takes place after said second receiving step and before said second recombining step by relatively delaying the received streams of frame segments in accordance with the determined transmission delays.

13. A method according to any preceding claim wherein, each frame includes at least one flag identifying a start or end of the frame.

14. A method according to claim 13, wherein each frame includes a data portion and a portion containing error checking codes.

15. A method according to any preceding claim wherein each frame segment is transmitted as a packet and said transmission delay is determined to be multiple of the length of the packet.

16. A method of receiving a stream of frames of a known communication protocol as a plurality of streams of frame segments over a corresponding plurality of communication channels, each communication channel introducing different possible transmission delays, each stream of frame segments comprising a plurality of frame segments for a plurality of frames, the method comprising:
receiving the streams of frame segments in said communication channels;
recombining the received streams of frame segments by interleaving the received streams of frame segments to form a recombined stream; and
determining the relative transmission delays by introducing various relative delays and recombining the streams of frame segments until valid frames are detected in the recombined stream.

17. A method according to claim 16, including the step of transmitting the determined transmission delays to a remote terminal which transmitted said streams of frame segments for use in compensating for transmission delays so that the recombining step recreates said valid frames in the recombined stream.

18. A method according to claim 16, including compensating for the transmission delays in said communication channels by using the determined transmission delays to relatively delay the received streams of frame segments to recreate said valid frames in the recombined stream.

19. A method according to any one of claims 16 to 18, wherein each frame includes at least one flag identifying a start or end of the frame.

20. A method according to claim 19, wherein each frame includes a data portion and a portion containing error checking codes.

21. A method according to any one of claims 16 to 20, wherein said streams of frame segments are transmitted as packets and said transmission delay is determined to be a multiple of the length of the packets.

22. A method of transmitting a stream of frames as a plurality of streams of frame segments over a corresponding plurality of communication channels, each channel introducing different possible transmission delays, the method comprising:
receiving a stream of frames of a known communication protocol;
splitting each frame to form a stream of frame segments for each communication channel without the addition of any data for synchronising said communication channels;
transmitting the formed streams of frame segments in said communication channels;
receiving an indication that said streams of frame segments are being received with relative delays therebetween;
determining the transmission delays by introducing various relative delays in transmission until an indication is received that valid frames have been received; and
compensating for the determined transmission delays by relatively delaying the transmitted streams of frame segments in accordance with the determined transmission delays.

23. A method according to claim 22, wherein each frame includes at least one flag identifying a start or end of the frame.

24. A method according to claim 23, wherein each frame includes a data portion and a portion containing error checking codes.

25. A method according to any one of claims 22 to 24, wherein each frame segment is transmitted as a packet and said transmission delay is determined to be multiple of the length of the packets.

26. A method of transmitting a stream of frames as a plurality of streams of frame segments over a plurality of communication channels, each communication channel introducing different possible transmission delays, the method comprising:
receiving a stream of frames of a known communication protocol;
splitting each frame to form a stream of frame segments for each communication channel without the addition of any data for synchronising said communication channels;
transmitting the formed streams of frame segments in said communication channels;
receiving information on the relative transmission delays experienced by the transmitted streams of frame segments; and
compensating for the transmission delays by relatively delaying the transmitted streams of frame segments in accordance with the received information on the transmission delays.

27. A method according to claim 26, wherein each frame includes at least one flag identifying a start or end of the frame.

28. A method according to claim 27, wherein each frame includes a data portion and a portion containing error checking codes.

29. A method according to any one of claims 26 to 28, wherein each frame segment is transmitted as a packet and said transmission delay is determined to be multiple of the length of the packet.

30. A communication system for communicating over a plurality of communication channels, each communication channel introducing a different possible transmission delay, the system comprising:
splitting means for splitting an input stream of frames of a known communications protocol to form a stream of frame segments for each communication channel without the addition of any data for synchronising said communication channels;
transmitting means for transmitting the formed streams of frame segments in said communication channels;
receiving means for receiving the transmitted streams of frame segments;
recombining means for recombining the received streams of frame segments to form a recombined stream;
determining means for determining any relative transmission delays by relatively delaying the streams of frame segments until valid frames are detected in the recombined stream; and
compensating means for compensating for any relative transmission delays between said communication channels to recreate valid frames in the recombined stream using the determined relative transmission delays.

31. A communication system according to claim 30, wherein said determining means is adapted to determine the relative transmission delays by relatively delaying the streams of frame segments before transmission by said transmitting means.

32. A communication system according to claim 30, wherein said determining means is adapted to determine the relative transmission delays by relatively delaying the streams of frame segments after transmission by said transmitting means.

33. A communication system according to claim 30 or claim 31, wherein said compensating means is adapted to compensate for the transmission delays before transmission of said streams of frame segments by said transmitting means.

34. A communication system according to claim 30 or claim 32, wherein said compensating means is adapted to compensate for the transmission delays after reception and before recombination of the received streams of frame segments.

35. A communication system according to any one of claims 30 to 34, wherein said splitting means and said transmitting means are provided in a first terminal and said receiving means and said recombining means are provided in a second terminal; said second terminal is provided with a further splitting means like said splitting means, and a further transmitting means like said transmitting means; and said first terminal is provided with a further receiving means like said receiving means and a further recombining means like said recombining means; the system including a further compensating means for compensating for the delays experienced by streams of frame segments transmitted from said second terminal to said first terminal over a plurality of communication channels.

36. A communication system according to claim 35, wherein said further compensating means is adapted to compensate for the delays experienced by said streams of frame segments transmitted from said second terminal over said communication channels using the relative transmission delays determined by said determining means.

37. A communication system according to claim 35, including further determining means for determining the relative transmission delays experienced by streams of frame segments transmitted from said second terminal to said first terminal by relatively delaying the streams of frame segment until valid frames are detected in the recombined stream, wherein said further compensating means is adapted to compensate for the delays experienced by the streams of frame segments transmitted from said second terminal to said first terminal over said communication channels using the relative transmission delays determined by said further determining means.

38. A communication system according to claim 37, wherein said second determining means is adapted to determine the relative transmission delays by relatively delaying the streams of frame segments before transmission by said further transmitting means.

39. A communication system according to claim 37, wherein said second determining means is adapted to determine the relative transmission delays by relatively delaying the streams of frame segments after reception by said further reception means.

40. A communication system according to any one of claims 35 to 38, wherein said further compensating means is adapted to compensate for the transmission delays before transmission of said streams of frame segments by relatively delaying the formed streams of frame segments in accordance with the determined transmission delays.

41. A communication system according to any one of claims 35 to 37 or 39, wherein said further compensating means is adapted to compensate for said transmission delays after reception and before recombination of the received streams of frame segments by relatively delaying the received streams of frame segments in accordance with the determined transmission delays.

42. A communication system according to any one of claims 30 to 41, wherein each frame including at least one flag identifying a start or end of the frame.

43. A communication system according to claim 42 wherein each frame includes a data portion and a portion containing error checking codes.

44. A communication system according to any one of claims 30 to 43, wherein said transmitting means is adapted to transmit each frame segment as a packet and said determining means is adapted to determine said transmission delays to be a multiple of the length of the packets.

45. A communication receiver for receiving a stream of frames of a known communication protocol as a plurality of streams of frame segments over a corresponding plurality of communication channels, each communication channel introducing different possible transmission delays, each stream of frame segments comprising a plurality of frame segments for a plurality of frames, the receiver comprising:
receiving means for receiving the streams of frame segments in said communication channels;
recombining means for recombining the received streams of frame segments by interleaving the received streams of frame segments to form a recombined stream; and
determining means for determining the relative transmission delays by introducing various relative delays and recombining the streams of frame segments until valid frames are detected in the recombined stream.

46. A communication receiver according to claim 45, including means for transmitting the determined transmission delays to a remote terminal which transmitted said streams of frame segments for use in compensating for transmission delays so that said recombining means recreates said valid frames in the combined stream.

47. A communication receiver according to claim 45, including compensating means for compensating for the transmission delays in said communication channels by using the determined transmission delays to relatively delay the received streams of frame segments to recreate said valid frames in the recombined stream.

48. A communication receiver according to any one of claims 45 to 47, wherein each frame including at least one flag identifying a start or end of the frame.

49. A communication receiver according to claim 48, wherein each frame includes a data portion and a portion containing error checking codes.

50. A communication receiver according to any one of claims 45 to 49, wherein each frame segment is transmitted as a packet and said transmission delay is determined to be multiple of the length of the packets.

51. A communication transmitter for transmitting a stream of frames as a plurality of streams of frame segments over a corresponding plurality of communication channels, each channel introducing different possible transmission delays, the transmitter comprising:
receiving means for receiving a stream of frames of a known communication protocol;
splitting means for splitting each frame to form a stream of frame segments for each communication channel without the addition of any data for synchronising said communication channels;
transmitting means for transmitting the formed streams of frame segments in said communication channels;
receiving means for receiving an indication that said streams of frame segments are being received with relative delays therebetween;
determining means for determining the transmission delays by introducing various relative delays in transmission until no indication is received that valid frames have been received; and
compensating means for compensating for the transmission delays by relatively delaying the transmitted streams of frame segments in accordance with the determined transmission delays.

52. A communication transmitter according to claim 51, wherein each frame including at least one flag identifying a start or end of the frame.

53. A communication transmitter according to claim 52, wherein each frame includes a data portion and a portion containing error checking codes.

54. A communication transmitter according to any one of claims 51 to 53, wherein each frame segment is transmitted as a packet and said transmission delay is determined to be multiple of the length of the packets.

55. A communication transmitter for transmitting a stream of frames as a plurality of streams of frame segments over a plurality of communication channels, each communication channel introducing different possible transmission delays, the transmitter comprising:
receiving means for receiving frames of a known communication protocol;
splitting means for splitting each frame to form a stream of frame segments for each communication channel without the addition of any data for synchronising said communication channels;
transmitting means for transmitting the formed streams of frame segments in said communication channels;
receiving means for receiving information on the relative transmission delays experienced by the transmitted streams of frame segments; and
compensating means for compensating for the transmission delays by relatively delaying the transmitted streams of frame segments in accordance with the received transmission delays.

56. A communication transmitter according to claim 55, wherein each frame including at least one flag identifying a start or end of the frame.

57. A communication transmitter according to claim 56, wherein each frame includes a data portion and a portion containing error checking codes.

58. A communication transmitter according to any one of claims 55 to 57, wherein each frame segment is transmitted as a packet and said transmission delay is determined to be multiple of the length of the packets.

59. A communication transceiver comprising the communication transmitter of any one of claims 51 to 58, and the communication receiver according to any one of claims 45 to 50.
